# EUROPEAN PATENT APPLICATION

(11) **EP 3 064 070 A1**
(43) Date of publication of application: **07.09.2016**
(21) Application number: 15157487.8
(22) Date of filing: 03.03.2015
(51) Int. Cl.: A23G 9/34, A23G 9/44

(54) **Frozen confectionery gel product and a process for manufacturing same**

(71) Applicant: Nestec S.A., 1800 Vevey (CH)
(72) Inventor: GOREVAYA, Irina Aleksandrovna, Russian Federation (RU); BARINOV, Vyacheslav Aleksandrovich, Russian Federation (RU)
(74) Representative: Elleby, Gudrun

(57) **Abstract**

The invention relates to a frozen confectionery product which is stretchable in a semifrozen or non-frozen state. The product comprises 0,5 % to 1 wt. % gelling system by weight of the total product, wherein the gelling system comprises xanthan gum and locust bean gum, 2 to 9 wt. % of non-digestible fibers, below 0,52 wt. % citric acid, 0,2 to 0,9 wt. % flavoring agent and sweetening enhancer, 8 to 10 wt. % glucose syrup, 7 to 11 wt. % sugar, and 4 to 6 wt. % dextrose. The invention also relates to a process for making the product.

## Description

### Field of the invention

The present invention relates to sugar reduced frozen confectionery products comprising a jelly and a method for manufacturing the same.

### Background

Frozen confectionery products with stretchable jelly are known and are popular in particular with children.

Examples of such confectionery product could be the "jelly tongue" products commercialized by Nestle under the brand Kimy in Philippines. These products consist of a frozen confection of jelly, wherein said jelly become stretchable when heated in the consumer mouth. Stretchability of these products has an important play value for young consumers.

For kids frozen confectionery products there is a wish to reduce sugar in the composition while retraining the play values. Examples of commercial products comprises e.g. about 30 g of added sugar per 100 g of product. It is desirable to provide the consumers with a healthier option.

Elasticity (or Stretchability) feature of the jelly products is obtained through complex gum and additive combination. If the amount of gums to achieve said gelling system is too high it would leave an unpleasant texture coating the consumers' mouth, a gummy sensation that would hide flavour perception.

Sugar reduction could be achieved through the use of bulking agent substituting sugar e.g. by non-digestible fibres, which are known bulking agent that could be used in this purpose. However, reducing the amount of sugar through the use of non-digestible fibres would also reduce the sweet taste which is one of the flavours the young consumers are expecting from frozen confectionery. Sweet flavour enhancers are known in the art, but their taste limits to the use.

In some configuration the sugar reduction induces a loss in sweetness in the product that cannot be compensated by sweet flavour agents.

Reducing the amount of gum additives in a composition could be a solution to increase the perception of sweetness and flavour; however this would lead to a reduction of the elastic properties of the product (i.e. stretchability of the jelly layer). Evolution of flavour perception and elastic properties seem to be inversely related in a sugar reduced frozen confectionery products with a stretchable jelly.

There is therefore a need to find a way to balance the elastic properties and the perceived sweetness and flavour of a sugar reduced frozen confectionery product while providing a stretchable jelly.

### Object of the invention

It is thus the object of the present invention to provide a frozen confectionery product with a stretchable jelly that is sugar reduced, while having a sweet taste.

### Summary of the invention

It was surprisingly found that a specific balance between the gelling system and the flavoring agents provides a product with the desired characteristics.

Accordingly, in a first aspect the present invention relates to a frozen confectionery products which in a semi-frozen or non-frozen state is stretchable. The frozen confectionery product comprising
0,5 % to 1 wt. % gelling system by weight of the total product, wherein the gelling system comprises xanthan gum and locust bean gum,
2 to 9 wt. % of non-digestible fibers,
below 0,52 wt. % citric acid, 0,2 to 0,9 wt. % flavoring and sweetening agents,
8 to 10 wt. % glucose syrup,
7 to 11 wt. % sugar, and
4 to 6 wt. % dextrose.

In a second aspect the present invention relates a process for preparing a frozen confection as described above, comprising the steps of
providing the gelling system, the non-digestible fibers, the citric acid, glucose syrup, sugar and dextrose,
mixing the ingredient with water,
pasteurizing the mixture,
adding the flavouring agents and sweetening enhancers,
dosing and freezing the frozen confection..

It has been found that according to the invention a stretchable jelly product is provided which is low in sugar, is sweet and has a good flavour and can be stretched in a non-frozen state twice the length of the product without breaking.

The frozen confectionery products with a stretchable jelly according to the present invention has an added sugar content which about half of the amount of commercially available jelly and still provides the benefits as discussed above.

### Brief description of the figure

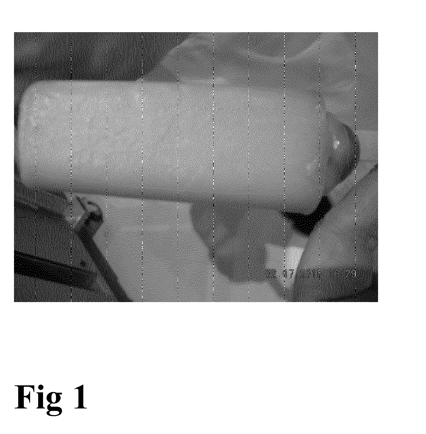

Figure 1 shows a picture of the frozen confectionary product according to the present invention such as obtain after moulding and stick insertion. Weight of 1 portion is 50 g, size 45 ml.

### Detailed description of the invention

It has been found that with the gelling system present in an amount of 0,5 % to 1 wt. % by weight of the total product and comprising xanthan gum and locust bean gum, provides a product which allows a good stretching e.g. to 2 to 3 times the length of the product in a non-frozen state can be obtained e.g. at 30°C. Above 1 wt. % of gelling system the product becomes too thick and cannot be processed and dosed. With 0,5 wt. % to 1 wt. % gelling system the product can be dosed at a temperature about 40°C e.g. into moulds. With an amount of gelling system below this range the stretching properties will not be sufficient to allow a good stretching and thus play value of the product is reduced.

In a preferred embodiment of the invention the gelling system comprises xanthan gum and locust bean gum in a 1 to 1 ratio.

The gelling system may comprise other additional gelling agents for example gellan.

In the present context a non-digestible fibre is a water soluble polymer comprising at least 3 monomer units of glucose derivatives, which polymer is not absorbed through the human digestive tract. The non-digestible fibers are in particular a resistant maltodextrin or a resistant dextrin, for example Promitor®.

According to the invention 2 to 9 wt. % of non-digestible fibers is present in the product. Below this range the solid content of the product is not sufficient to provide a good texture of the product. Above the upper limit of the range the taste of the product is not agreeable. It is preferred that the non-digestible fibers are present in an amount from 4 to 8 wt. %, more preferably at 6% wt.

A preferred sauce of non-digestible fibers is maltodextrins e.g. Promitor®.

Further in the present context unless otherwise indicated % of a component means the % of weight based on the weight of the composition, i.e. weight/weight %.

The product according to the invention may be aerated or non-aerated. Overrun is typically produced by intentionally incorporating gas into the product, such as by mechanical agitation. The gas can be any food gas, such as air, nitrogen or carbon dioxide. Mixes that are not intentionally aerated may nonetheless contain a small amount of gas which is incorporated during the processing of the mix. For aerated mixes, the overrun is preferably at least 60%, more preferably at least 80%.

Overrun is measure at atmospheric pressure and is defined by (density of the mix-density of the final product) divided by the density of the mix.

According to the invention the frozen confection comprises 0,2 to 0,9 wt. % flavoring and sweetening agents. It is preferred that the flavouring agent are selected among fruit flavouring agent, a particular preferred flavouring agent is a strawberry flavour. The flavouring agent is present in an amount between 0,2 and 0.6, preferably 0,3 to 0,5 %.

In the present context a sweetness enhancer is a natural flavouring agent that imparts a sweeter perception of other flavours already present. The sweetening enhancer should preferably not be above 0.45 wt. % which has been found to provide an off taste to the product. It is further preferred that the sweetening enhancer is present in an amount between 0.3 and 0.4 wt. %.

In a preferred embodiment of the invention the product comprises concentrated fruit juice.

According to the invention the frozen confection comprises below 0,52 wt. % citric acid. It has been found that a higher amount of citric acid does not give an agreeable taste in a low sugar product. A preferred amount of citric acid is 0.48 to 0.51 %, more preferably 0.5 wt. %.

It has been found that a stretchable product can be obtained with as low as 7 to 11 wt. % sugar. A preferred amount of sugar is 9 to 11 wt. % sugar. According to the invention the product also contains 8 to 10 wt. % glucose syrup, preferably 9 wt. % glucose syrup. Glucose syrup provides solids to the product but a too high amount provides an off taste to the product which is not present in the preferred ranges provide above. The product according to the invention further comprises 4 to 6 wt. % dextrose, preferably 5 to 6 wt. % dextrose.

In a preferred embodiment of the invention the product has a solid content of 20 to 32 wt. %, preferably 20 to 30 wt. %. The ingredient discussed above is preferable mixed with water.

The product may be coloured. Preferred colouring agents are natural colours agents for example carmine, annatto or combinations thereof.

In a preferred embodiment of the invention the frozen confectionery product is presented on a stick.

### Process

In another embodiment of the invention relates to the process discussed above.
providing the gelling system, the non-digestible fibers, the citric acid, glucose syrup, sugar and dextrose,
mixing the ingredient with water,
pasteurizing the mixture,
adding the flavouring agents and sweetening enhancers,
dosing and freezing the frozen confection..

Preferably the first step is performed at about 70°C, with 25 minutes of mixing, and the components are added to water in a strict order: glucose syrup, dextrose, non-digestible fibers, locust bean gum and xanthan gum. The locust bean gum and xanthan gum are pre mixed with sugar beforehand.

Subsequently the pasteurization is performed, preferably at about 90°C for 30 seconds.

The mixing of the colouring agents, flavouring agents, fruit juice are added to the jelly obtained and the obtained mixture is stirred and used in production over a 6 hours period of time.

The citric acid which can have been previously dissolved in warm water is added. Natural colorants and flavours are added after the pasteurization step in order to avoid degradation.

### EXAMPLES

By way of example and not limitation, the following examples are illustrative of various embodiments of the present disclosure.

### Recipe and preparation:

| Jelly Mix composition | 100 kg |
|---|---|
| Water | 67.436 kg |
| Sugar | 9.3 kg |
| Glucose Syrup 38-42 DE | 9 kg |
| Maltodextrin powder 20 DE | 6 kg |
| Dextrose monohydrate | 5.5 kg |
| Strawberry juice (concentration factor 8.7) | 0.8 kg |
| Coloring agents: | |
| Color Carmine | 0.13 kg |
| Color Annato | 0.01 kg |
| Gelling system | |
| Xanthan gum | 0.312 kg |
| Locust bean gum | 0.312 kg |
| Water | |

### Comparative examples

14 comparative examples were made using the mix composition as described above but with different flavoring agent proportions (see table 1).

**Table 1: flavors and citric acid modifications**

| **Example** | **citric acid (kg/100kg)** | **sweet flavor (kg/100kg)** | **strawberry flavour (kg/100kg)** |
|---|---|---|---|
| **1** | 0.53 | 0.3 | 0.12 |
| **2** | 0.5 | 0.7 | 0.6 |
| **3** | 0.5 | 0.3 | 0.12 |
| **4** | 0.5 | 0.35 | 0.2 |
| **5** | 0.3 | 0.3 | 0.31 |
| **6** | 0.5 | 0.5 | 0.6 |
| **7** | 0.5 | 0.6 | 0.5 |
| **8** | 0.5 | 0.4 | 0.7 |
| **9** | 0.5 | 0.2 | 0.3 |
| **10** | 0.5 | 0.6 | 0.5 |
| **11** | 0.5 | 0.4 | 0.4 |
| **12** | 0.5 | 0.3 | 0.4 |
| **13** | 0.5 | 0.4 | 0.3 |
| **14** | 0.5 | 0.4 | 0.5 |

Values for each ingredient in table 1 are given in kg for 100 kg of frozen confectionery.

All the examples presented in table 1 will be further commented below. Modifications were performed on the flavoring system therefore comments will focus on the flavor of the products thus obtained. However one should keep in mind that the stretchability of the products was also evaluated. By acceptable stretchability it is meant that the jelly product, warmed at temperatures above 30°C, could be stretched to twice its original size without breaking.

### Examples outside the scope of the present invention

### Example 1

Fruit taste is too weak, product is not sweet enough. Note that citric acid is above 0.52 % and strawberry flavor is below 0.3%.

### Example 2

Too much off flavours, "chemical" taste. Note that sweet flavor is above 0.4% and strawberry flavor is above 0.5%.

### Example 3

Fruit taste is too weak, product is not sweet enough. Note that strawberry flavor is below 0.3%.

### Example 4

Fruit taste is too weak, acidity is well balanced. Note that strawberry flavor is below 0.3%.

### Example 5

Fruit taste is too weak, bland flavor.

### Example 6

Too much off flavours, "chemical" taste. Note that sweet flavor is above 0.4% and strawberry flavor is above 0.5%.

### Example 7

Too much off flavours, "chemical" taste. Note that sweet flavor is above 0.4%.

### Example 8

Too much off flavours, "chemical" taste. Note that strawberry flavor is above 0.5%.

### Example 9

Product is not sweet enough. Note sweet flavor is below 0.3%.

### Example 10

Too much off flavours, "chemical" taste. Note that sweet flavor is above 0.4%.

### Examples according to the invention

### Examples 11 to 14

These 4 examples present good acidity, fruit taste and sweet taste balance. Moreover their stretchability was good.

### Preparation of the product

Sugar, glucose syrup, dextrose, resistant fibers and gelling system are mixed in water at high temperature (about +70°C) for about half an hour.

Then the mix is quickly pasteurized at about 90°C and allowed to cool at about 50°C. Coloring agents, flavoring agents, fruit juice and citric acid dissolved in water are then added to the matured mix.

After thorough stirring the jelly thus obtained is pumped to the moulding line at about 45°C for about 6 hours. Filled moulds are frozen and sticks are inserted. The products are then further frozen and subsequently demoulded. Frozen confectionary products according to the present invention are thus obtained (see picture 1).

It should be understood that various changes and modifications to the presently preferred embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A frozen confectionery product comprising
0,5 % to 1 wt. % gelling system by weight of the total product, wherein the gelling system comprises xanthan gum and locust bean gum,
2 to 9 wt. % of non-digestible fibers,
below 0,52 wt. % citric acid,
0,2 to 0,9 wt. % flavoring agent and sweetening enhancer,
8 to 10 wt. % glucose syrup,
7 to 11 wt. % sugar, and
4 to 6 wt. % dextrose.

2. A frozen confectionery product according to claim 1, wherein the gelling system further comprises gellan.

3. A frozen confectionery product according to claims 1 and 2, wherein the xanthan gum and locust bean gum are present in a 1 to 1 ratio.

4. A frozen confectionery product according to any of the preceding claims, wherein the non-digestible fibers is present in an amount of 4 to 8 wt. %.

5. A frozen confectionery product according to any of the preceding claims, wherein the citric acid is present in an amount of 0.48 to 0.51wt. %.

6. A frozen confectionery product according to any of the preceding claims, wherein the sweetening enhancer is not present in an amount above 0.45 wt. %, preferably between 0.3 and 0.4 wt. %.

7. A frozen confectionery product according to any of the preceding claims, further comprising concentrated fruit juice.

8. A frozen confectionery product according to any of the preceding claims, wherein the glucose syrup is present in an amount of 9 wt. %.

9. A frozen confectionery product according to any of the preceding claims, wherein the amount of sugar in the product is 9 to 11 wt. % sugar.

10. A frozen confectionery product according to any of the preceding claims, wherein the amount of dextrose in the product is 5 to 6 wt. %.

11. A frozen confectionery product according to any of the preceding claims, wherein the total solid of the product is 20 to 32 wt. %.

12. A process for preparing a frozen confection according to claims 1 to 11, comprising the steps of
providing the gelling system, the non-digestible fibers, the citric acid, glucose syrup, sugar and dextrose,
mixing the ingredient with water,
pasteurizing the mixture,
adding the flavouring agents and sweetening enhancers,
dosing and freezing the frozen confection..
